# EUROPÄISCHE PATENTSCHRIFT

(11) **EP 0 452 551 B1**
(45) Veröffentlichungstag und Bekanntmachung des Hinweises auf die Patenterteilung: **08.03.1995**
(21) Anmeldenummer: 90123241.3
(22) Anmeldetag: 04.12.1990
(51) Int. Cl.: H02K 24/00

(54) **Drehmelder**
Resolver
Résolveur

(30) Priorität: 19.04.1990 DE 4012546
(43) Veröffentlichungstag der Anmeldung: 23.10.1991
(73) Patentinhaber: SIEMENS AKTIENGESELLSCHAFT, 80333 München (DE)
(72) Erfinder: Golker, Walter, W-8228 Freilassing (DE); Heimann, Josef, Dipl.-Ing., W-8000 München 90 (DE)

(56) Entgegenhaltungen:
- EP-A- 0 259 538
- DE-A- 3 724 349
- FR-A- 2 381 284
- US-A- 2 847 589
- US-A- 3 096 455
- US-A- 3 153 165
- US-A- 3 993 920
- MECHANICAL ENGINEERING, Bd. 107, Nr. 6, Juni 1985, NEW YORK, US, Seiten 40 - 51; C.W de SILVA: "MOTION SENSORS IN INDUSTRIAL ROBOTS"

## Beschreibung

Die Erfindung betrifft einen Drehmelder mit einem Gehäuse, einem mit dem Gehäuse fest verbundenen Stator mit mindestens einer Statorwicklung und einem in dem Gehäuse über eine Rotorwelle gelagerten Rotor mit mindestens einer Rotorwicklung, wobei der Stator und der Rotor einander mit zur Drehachse senkrechten Stirnflächen unter Bildung eines ringscheibenförmigen axialen Luftspaltes gegenüberstehen und jede Wicklung durch mehrere in einer Ebene angeordnete Leiterschleifen gebildet wird, die jeweils in einer zur Drehachse senkrechten Ebene symmetrisch um diese herum verteilt auf der Stirnfläche eines Stator-Eisenteils bzw. eines Rotor-Eisenteils angeordnet sind.

Drehmelder, die vielfach auch unter den englischen Bezeichnungen Synchro oder Resolver bekannt sind, werden zur Übertragung von Winkelinformationen verwendet. Aufbau und Wirkungsweise dieser Drehmelder sind beispielsweise in der Zeitschrift "Funk-Technik" 1970, Seite 14 bis 16 und 49 bis 52, beschrieben. Beim herkömmlichen Aufbau von Drehmeldern bestehen der Stator und der Rotor jeweils aus Blechpaketen, in deren Nuten eine oder mehrere Wicklungen liegen. Die Rotorwicklungen sind entweder über Schleifkontakte oder über einen Drehtransformator angeschlossen. Durch den Luftspalt zwischen Stator und Rotor sind somit eine Primärwicklung und eine Sekundärwicklung miteinander gekoppelt. Wird an die Primärwicklung eine Wechselspannung angelegt, so erzeugt diese in der Sekundärwicklung eine Sekundärspannung, die je nach Winkelstellung zwischen Stator und Rotor zwischen 0 und einem Maximalwert verändert wird.

Bei dem obengenannten Aufbau der herkömmlichen Drehmelder wird durch den Wickelkopf, d. h. durch den nichtaktiven Teil der Wicklung, und durch unterschiedliche magnetische Sättigung in den genuteten Blechpaketen des Stators und des Rotors eine sogenannte Nullspannung hervorgerufen, die eine unerwünschte zusätzliche Erwärmung verursacht. Diese Nullspannung wird zusätzlich durch den Schleifgrat an den Nutkanten und Blechtrennstellen des Stator- und Rotorpakets beeinflußt. Eine weitere Fehlerquelle beim Drehmelder ist die erste Oberwelle im elektrischen Fehler, hervorgerufen durch Einlegefehler, Windungszahlfehler in einzelnen Spulen oder durch magnetische Unsymmetrie im Eisenkreis. Solche Unsymmetrien entstehen durch Unrundheit der Statorbohrung oder des Rotoraußendurchmessers, sowie durch exzentrischen Einbau der Blechpakete, aber auch durch unregelmäßige Schichtung der Blechpakete, weil die Bleche in und quer zur Walzrichtung unterschiedliche magnetische Leitfähigkeit etwa im Verhältnis von 4:1 haben. Auch die Nuten im Rotor und im Stator beeinflussen durch Nutungsoberwellen den elektrischen Fehler des Drehmelders.

Für bestimmte Anwendungsfälle sind die herkömmlichen Drehmelder auch in Axialrichtung zu lang. Man könnte zwar durch entsprechende Änderung der Konstruktion die Baulänge verringern, doch erfordern derartige Änderungen für jede Variante sehr hohe Investitionen in der Fertigung. Zudem würden die oben erwähnten Nachteile des Aufbaus auch bei einer Verkürzung der Achse nicht beseitigt.

Aus der FR-A-2 381 284 ist bereits ein Drehmelder der eingangs genannten Art bekannt, bei dem ein Stator und ein Rotor mit zur Drehachse senkrechten Stirnflächen einander gegenüberstehen, wobei die Wicklungen in Form von rechtwinkeligen Spiralen als gedruckte Schaltungen auf den Stirnflächen der Eisenteile angeordnet sind. Allerdings besitzt dort der Stator zwei Eisenteile, die mit U-förmigem Querschnitt die Rotorscheibe einschließen, wobei auf jeder Oberfläche jeweils nur eine Wicklungsebene angeordnet ist.

Aus der US-A-3,153,165 ist außerdem eine elektrische Synchro-Maschine bekannt, bei der Wicklungen jeweils auf einen magnetischen Ring aufgebracht sein können. Diese Wicklungen besitzen einen flachen Träger, wobei jedoch jede einzelne Windung zur Hälfte auf einer Seite und zur anderen Hälfte auf der anderen Seite des Trägers gebildet ist. Das bedeutet, daß für jede Windung zwei leitende Verbindungen für die Halbwindungen durch Löcher des Trägers hindurch notwendig sind.

Aufgabe der Erfindung ist es, einen Drehmelder der eingangs genannten Art zu schaffen, der nicht nur eine sehr kurze Axiallänge ermöglicht, sondern auch die Herstellung von Stator und Rotor mit noch geringerem Fertigungsaufwand ermöglicht und zugleich zu einer Verminderung des elektrischen Fehlers, insbesondere der Nullspannung, beiträgt.

Erfindungsgemäß wird diese Aufgabe bei einem Drehmelder der eingangs genannten Art dadurch gelöst, daß die eine Wicklung bildenden Leiterschleifen in Form von annähernd kreisförmigen Leiterspiralen auf mindestens einer Oberfläche einer durch eine Folie gebildeten Wicklungsscheibe ausgebildet sind und daß die Wicklungsscheiben auf die Stirnflächen des Stator-Eisenteils bzw. des Rotor-Eisenteils aufgeklebt sind.

Durch die Gestaltung der Wicklungen im Drehmelder in Form von annähernd kreisförmigen Leiterspiralen, die beispielsweise in der bereits bekannten Weise als geätzte Leiterbahnen hergestellt werden können, werden Windungszahl- bzw. Einlegefehler vermieden. Da keine Nuten vorhanden sind, gibt es auch keine unerwünschten Nutungsoberwellen. Außerdem ist die Nullspannung geringer als bei herkömmlichen Drehmeldern mit koaxial angeordneten Wicklungen, weil der Eisenkreis nicht mechanisch bearbeitet zu werden braucht und weil durch die Wicklungsanordnung der Wickelkopf fehlt. Durch die erfindungsgemäße Erzeugung der Leiterspiralen auf scheibenförmigen Folien und durch das Aufkleben dieser Folien auf die Oberflächen des Stators bzw. des Rotors ergibt sich ein besonders geringer Fertigungsaufwand.

Der Drehmelderluftspalt ist bei der Erfindung ein axialer Luftspalt zwischen den Stirnflächen von Stator und Rotor. Dieser Luftspalt muß in der Fertigung auf ein Minimum eingestellt werden, da von der Größe des Luftspaltes die Phasenverschiebung zwischen Eingangs- und Ausgangsspannung des Drehmelders abhängt. Soweit bei dem erfindungsgemäßen Drehmelder der Luftspalt nicht genauso klein eingestellt werden kann wie der radiale Luftspalt bei herkömmlichen Drehmeldern, empfiehlt es sich, die Erregerfrequenz im Bereich von 1 bis 20 kHz zu wählen, um so die Phasenverschiebung gering zu halten.

In zweckmäßiger Ausgestaltung besitzen sowohl der Stator als auch der Rotor jeweils einen einzigen scheibenförmigen Eisenteil mit einander zugekehrten Stirnflächen, auf denen die Wicklungsscheiben befestigt sind. Dabei ist es zweckmäßig, jeweils auf beiden Seiten der Folien einander gegenüberliegende gleichsinnige Leiterspiralen auszubilden, die jeweils eine gemeinsame Teilwicklung bilden. Die in Umfangsrichtung zueinander benachbart angeordneten Leiterspiralen bzw. Teilwicklungen weisen in einer bevorzugten Ausführungsform jeweils gegensinnige Wickelrichtungen auf und bilden so jeweils magnetische Polpaare. Eine besonders gute Aufteilung der Ringfläche auf den Wicklungsscheiben ergibt sich dann, wenn in einer Wicklungsebene jeweils sechs um die Drehachse des Rotors bzw. Stators herum verteilte Leiterspiralen bzw. Teilwicklungen mit abwechselnd gegensinniger Wickelrichtung angeordnet sind.

Da für die Erkennung der Drehrichtung zweckmäßigerweise zwei Sekundärwicklungen vorgesehen werden, weist der Stator oder der Rotor, vorzugsweise jedoch der Stator, zwei Wicklungsscheiben auf, wobei die erste eine Sinuswicklung und die zweite eine um elektrisch 90° versetzte Cosinuswicklung trägt. Bei der oben erwähnten bevorzugten Polpaarzahl von 3 (3-Speed-Drehmelder) ist demnach die Sinus-Wicklungsscheibe gegenüber der Cosinus-Wicklungsscheibe um mechanisch 30° versetzt. Der Rotor besitzt in diesem Fall nur eine Wicklungsscheibe. In manchen Fällen kann jedoch eine zweite Wicklung als Kurzschlußwicklung vorgesehen werden. In diesem Fall ist diese ebenfalls um elektrisch 90° gegenüber der eigentlichen Rotorwicklung versetzt.

Die Stromzuführung zum Rotor kann in bekannter Weise über einen Drehtransformator erfolgen. Dabei ist es zweckmäßig, den Transformator-Rotorkern mit dem Eisenteil des Rotors einstückig auszubilden. Die Wicklungen des Drehtransformators können in herkömmlicher Weise aufgebracht sein. Im Sinne einer möglichst kurzen Bauweise ist es aber auch möglich, diese Wicklungen ebenfalls als Wicklungsscheiben mit spiralförmigen Leiterbahnen auszubilden, falls die erreichbare Windungszahl ausreicht.

Die Erfindung wird nachfolgend an einem Ausführungsbeispiel anhand der Zeichnung näher erläutert. Es zeigt
Figur 1 einen erfindungsgemäß aufgebauten Drehmelder im Längsschnitt,
Figur 2 einen Querschnitt durch den Drehmelder von Figur 1 im Luftspalt zwischen Stator und Rotor,
Figur 3 eine Ansicht auf die vergrößerte Vorderseite einer Wicklungsscheibe und
Figur 4 eine schematische Darstellung des Magnetfeldverlaufes zwischen zwei einander gegenüberstehenden Wicklungsscheiben.

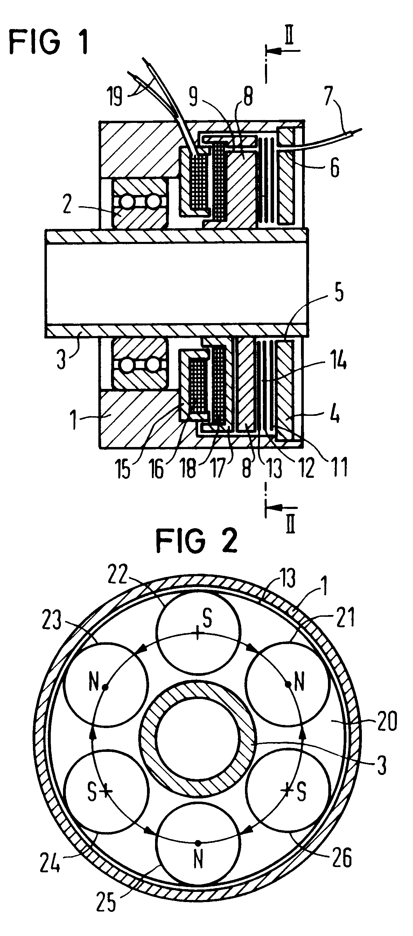

Der in den Figuren 1 und 2 dargestellte Drehmelder besitzt ein Gehäuse 1, in welchem über eine Lagerung 2 eine Rotorwelle 3, in diesem Fall eine Hohlwelle, drehbar gelagert ist. Mit dem Gehäuse 1 fest verbunden ist ein scheibenförmiges Stator-Eisenteil 4, welches eine zentrische Aussparung 5 für die Rotorwelle sowie ein oder mehrere Durchgangslöcher 6 für die elektrischen Anschlüsse der Statorwicklungen 7 aufweist. Auf der Rotorwelle 3 sitzt ein Rotor-Eisenteil 8, welches im wesentlichen ebenfalls als flache, glatte Scheibe ausgebildet ist und ein Durchgangsloch 9 für die Anschlußleitungen 19 der noch zu beschreibenden Rotorwicklung aufweist. Die Eisenteile 4 und 8 sind jeweils aus kunststoffumhülltem Eisenpulver in einem Stück gepreßt.

Der Stator besitzt zwei Wicklungen in Form von Wicklungsscheiben, nämlich eine Sinuswicklung 11 und eine Cosinuswicklung 12. Der Rotor besitzt eine Rotorwicklung 13, ebenfalls in Form einer Wicklungsscheibe. Die beiden Statorwicklungen 11 und 12 sind auf das Statoreisenteil 4 aufgeklebt, während die Rotorwicklung 13 auf das Eisenteil 8 des Rotors aufgeklebt ist. Zwischen ihnen ist der Drehmelder-Luftspalt 14 als Axialluftspalt gebildet.

Wie in Figur 1 weiter gezeigt ist, erfolgt die Stromzuführung zum Rotor über einen Drehtransformator, der aus einem Statorkern 15 mit einer Statorspule 16 und einem Rotorkern 17 mit einer Rotorspule 18 gebildet ist. Die Rotorspule 18 ist über das Durchgangsloch 9 mit der Rotorwicklung 13 verbunden. Die Statorwicklung 16 ist über die Anschlußleitungen 19 mit einer Wechselspannungsquelle verbunden. In Figur 1 ist lediglich in der unteren Hälfte ein getrennter Rotorkern 17 gezeigt. Wie in der oberen Hälfte von Figur 1 dargestellt ist, kann dieser Rotorkern auch in einem Stück mit dem Rotor-Eisenteil 8 des Drehmelders ausgebildet sein, wodurch die Zahl der Teile verringert wird. Möglich wäre auch eine Übertragung der Stromzuführung zum Rotor über Schleifringe.

Der Aufbau der Drehmelderwicklungen 11, 12 und 13 ist jeweils gleich. Er soll nun anhand der in Figur 2 sichtbaren Rotorwicklung 13 erläutert werden. Jede der in Figur 1 gezeigten Wicklungsscheiben besteht aus einer Folienscheibe 20, auf der im Kreis um die Achse herum sechs Teilwicklungen 21 bis 26 in Form von spiralförmigen Leiterbahnen ausgebildet sind. Die Wickelrichtung bzw. Spiralrichtung dieser Teilwicklungen verläuft abwechselnd im Uhrzeigersinn und im Gegenuhrzeigersinn, so daß auf dem Rotor abwechselnd ungleichnamige Pole erzeugt werden, in Figur 2 mit N und S bezeichnet, also insgesamte drei Polpaare oder sechs Pole.

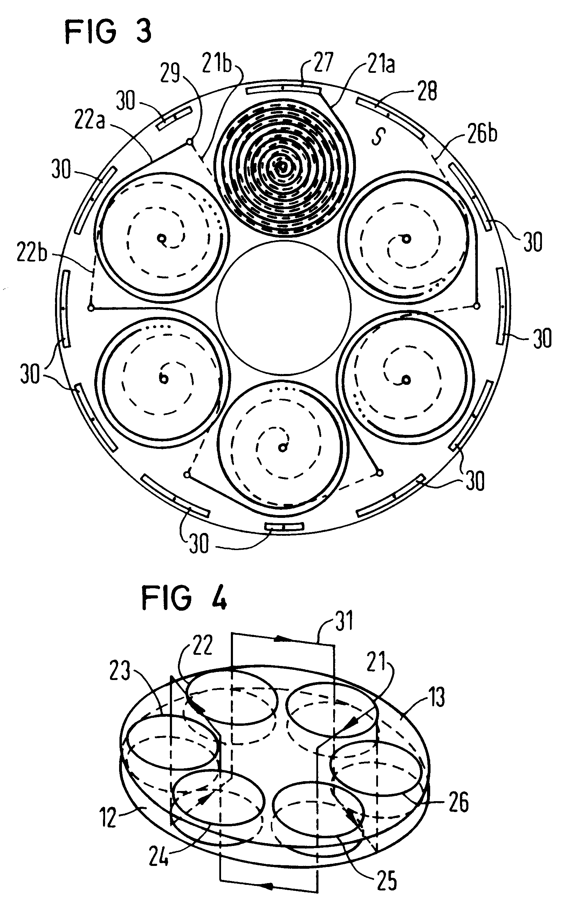

Der Aufbau einer Wicklungsscheibe ist in Figur 3 etwas vergrößert dargestellt. Die Folienscheibe 20 besitzt am Rand zwei leitende Anschlußflächen 27 und 28. Von der Anschlußfläche 27 verläuft eine Leiterbahn 21a spiralförmig nach innen, und zwar im Uhrzeigersinn bis zum Mittelpunkt. Dort ist die Leiterbahn zur gegenüberliegenden Oberfläche der Folie 20 durchkontaktiert und auf dieser gegenüberliegenden Seite wiederum in Spiralform von innen nach außen weitergeführt. Diese rückseitige Leiterbahn 21b verläuft ebenfalls im Uhrzeigersinn, so daß sie zusammen mit der vorderseitigen Leiterbahn 21a eine gemeinsame Teilwicklung erzeugt. Das Ende der Leiterbahn 21b ist zu einem Kontaktpunkt 29 geführt, welcher wiederum leitend mit einer auf der Vorderseite befindlichen Leiterbahn 22a verbunden ist. Die Leiterbahn 22a ist spiralförmig, diesmal im Gegenuhrzeigersinn, gewickelt, in der Mitte durchkontaktiert und auf der Rückseite in Form einer spiralförmigen Leiterbahn 22b zur Bildung einer Teilwicklung 22 weitergeführt. In gleicher Weise werden mit abwechselnder Wickelrichtung die weiteren Teilwicklungen 23 bis 26 gebildet, wobei das Ende der Leiterbahn 26b auf der Rückseite mit der Anschlußfläche 28 verbunden ist. Die weiteren metallischen Flächen 30 dienen beispielsweise zum Verlöten zweier Wicklungsscheiben im Falle der Statorwicklung.

Figur 4 zeigt schematisch den Feldverlauf zwischen zwei Wicklungsscheiben, beispielsweise der Rotorwicklung 13 und der Cosinuswicklung 12. Wird durch die aus den Teilwicklungen 21 bis 26 gemäß Figur 3 bestehende Wicklung ein Strom geschickt, so ergibt sich ein Magnetfeldverlauf 31, der auch die parallele Wicklungsscheibe 12 durchsetzt. Soweit die Teilwicklungen dieser Scheibe 12 deckungsgleich den Teilwicklungen der Scheibe 13 gegenüberliegen, wird dort der Maximalwert eines Sekundärstromes induziert. Durch gegenseitiges Verdrehen der Scheiben 13 und 12 ergibt sich ein sinusförmiger Stromverlauf in der Sekundärwicklung 12. Kommt dazu eine um elektrisch 90° versetzte zweite Sekundärwicklung, so wird auch in dieser ein entsprechend versetzter Stromverlauf erzeugt. Auf diese Weise kann wie beim herkömmlichen Drehmelder durch Abnahme der Stromsignale von den Sekundärwicklungen der Drehwinkel übertragen werden.

## Patentansprüche

1. Drehmelder mit einem Gehäuse (1), einem mit dem Gehäuse fest verbundenen Stator (4,11,12) mit mindestens einer Statorwicklung (11,12) und einem in dem Gehäuse über eine Rotorwelle (3) gelagerten Rotor (8,13) mit mindestens einer Rotorwicklung (13), wobei der Stator (4,11,12) und der Rotor (8,13) einander mit zur Drehachse senkrechten Stirnflächen unter Bildung eines ringscheibenförmigen axialen Luftspaltes (14) gegenüberstehen und jede Wicklung (11,12,13) durch mehrere in einer Ebene angeordnete Leiterschleifen ((21 bis 26) gebildet wird, die jeweils in einer zur Drehachse senkrechten Ebene symmetrisch um diese herum verteilt auf der Stirnfläche eines Stator-Eisenteils (4) bzw. eines Rotor-Eisenteils (8) angeordnet sind,
**dadurch gekennzeichnet,**
daß die eine Wicklung (11,12,13) bildenden Leiterschleifen in Form von annähernd kreisförmigen Leiterspiralen (21 bis 26) auf mindestens einer Oberfläche einer durch eine Folie (20) gebildeten Wicklungsscheibe ausgebildet sind und daß die Wicklungsscheiben auf die Stirnflächen des Stator-Eisenteils (4) bzw. des Rotor-Eisenteils (8) aufgeklebt sind.

2. Drehmelder nach Anspruch 1,
**dadurch gekennzeichnet**, daß der Stator und der Rotor jeweils einen einzigen scheibenförmigen Eisenteil (4,8) mit einander zugekehrten Stirnflächen aufweisen, auf denen die Wicklungsscheiben befestigt sind.

3. Drehmelder nach Anspruch 1 oder 2,
**dadurch gekennzeichnet**, daß auf beiden Seiten der Folien (20) jeweils gegenüberliegende, gleichsinnige Leiterspiralen (21a,21b ... 26a,26b) ausgebildet sind, die eine gemeinsame Teilwicklung (21 ... 26) bilden.

4. Drehmelder nach einem der Ansprüche 1 bis 3,
**dadurch gekennzeichnet**, daß die in Umfangsrichtung zueinander benachbart angeordneten Leiterspiralen bzw. Teilwicklungen (21 bis 26) des Stators und des Rotors jeweils abwechselnd gegensinnige Wickelrichtungen aufweisen und magnetische Polpaare (N; S) bilden.

5. Drehmelder nach einem der Ansprüche 1 bis 4,
**dadurch gekennzeichnet**, daß in einer Wicklungsebene jeweils sechs um die Drehachse gleichmäßig verteilte Leiterspiralen bzw. Teilwicklungen (21 bis 26) mit abwechselnd gegensinnigen Wickelrichtungen angeordnet sind.

6. Drehmelder nach einem der Ansprüche 1 bis 5,
**dadurch gekennzeichnet**, daß der Stator oder der Rotor, vorzugsweise jedoch der Stator, zwei Wicklungsscheiben (11,12) aufweist, wobei die erste eine Sinuswicklung (11) und die zweite eine um elektrisch 90° versetzte Cosinuswicklung (12) trägt.

7. Drehmelder nach einem der Ansprüche 1 bis 6,
**dadurch gekennzeichnet,** daß die Stromzuführung zum Rotor (8,13) über einen Drehtransformator (15,16,17,18) erfolgt, dessen Rotorspule (18) mit der Rotorwicklung (13) und dessen Statorspule (16) mit einer Wechselspannungsquelle verbunden ist.

8. Drehmelder nach Anspruch 7,
**dadurch gekennzeichnet**, daß ein Transformator-Rotorkern (17) mit dem Eisenteil (8) des Rotors einstückig ausgebildet ist.

9. Drehmelder nach Anspruch 7 oder 8,
**dadurch gekennzeichnet**, daß die Wicklungen des Drehtransformators ebenfalls durch Wicklungsscheiben mit spiralförmigen Leiterbahnen gebildet sind.

10. Drehmelder nach einem der Ansprüche 1 bis 9,
**dadurch gekennzeichnet,** daß zumindest die Eisenteile des Stators und des Rotors als Sinterteile aus kunststoffumhülltem Eisenpulver ausgebildet sind.

## Claims

1. Resolver having a housing (1), a stator (4, 11, 12) which is firmly connected to the housing and has at least one stator winding (11, 12), and a rotor (8, 13) which is supported in the housing via a rotor shaft (3) and has at least one rotor winding (13), the stator (4, 11, 12) and the rotor (8, 13) being opposite one another with end surfaces at right angles to the rotation axis forming an axial air gap (14) in the form of an annular disc, and each winding (11, 12, 13) being formed by a plurality of conductor loops (21 to 26) which are arranged in a plane and are in each case arranged in a plane at right angles to the rotation axis, distributed symmetrically around this plane, on the end surface of a stator iron part (4) or of a rotor iron part (8) respectively, characterized in that the conductor loops, which form a winding (11, 12, 13), are constructed in the form of approximately circular conductor spirals (21 to 26) on at least one surface of a winding disc which is formed by a film (20), and in that the winding discs are bonded onto the end surfaces of the stator iron part (4) or of the rotor iron part (8) respectively.

2. Resolver according to Claim 1, characterized in that the stator and the rotor each have a single disc-shaped iron part (4, 8) with mutually facing end surfaces on which the winding discs are mounted.

3. Resolver according to Claim 1 or 2, characterized in that conductor spirals (21a, 21b ... 26a, 26b) which are in each case opposite, are in the same direction and form a common winding element (21 ... 26) are constructed on both sides of the films (20).

4. Resolver according to one of Claims 1 to 3, characterized in that those conductor spirals and winding elements (21 to 26), which are arranged adjacent to one another in the circumferential direction, of the stator and of the rotor each have alternately opposite winding directions and form magnetic pole pairs (N; S).

5. Resolver according to one of Claims 1 to 4, characterized in that six conductor spirals and winding elements (21 to 26), which are distributed uniformly around the rotation axis and have alternately opposite winding directions, are in each case arranged in one winding plane.

6. Resolver according to one of Claims 1 to 5, characterized in that the stator or the rotor, but preferably the stator, has two winding discs (11, 12), the first being fitted with a sine winding (11) and the second being fitted with a cosine winding (12) which is offset through 90° electrical.

7. Resolver according to one of Claims 1 to 6, characterized in that electrical power is supplied to the rotor (8, 13) via a rotary transformer (15, 16, 17, 18) whose rotor coil (18) is connected to the rotor winding (13) and whose stator coil (16) is connected to an AC voltage source.

8. Resolver according to Claim 7, characterized in that a transformer-rotor core (17) is constructed integrally with the iron part (8) of the rotor.

9. Resolver according to Claim 7 or 8, characterized in that the windings of the rotary transformer are likewise formed by winding discs having spiral conductor tracks.

10. Resolver according to one of Claims 1 to 9, characterized in that at least the iron parts of the stator and of the rotor are constructed as sintered parts made of plastic-sheathed iron powder.

## Revendications

1. Synchro-transmetteur comportant un boîtier (1), un stator (4,11,12) relié rigidement au boîtier et ayant au moins un enroulement statorique (11,12) et un rotor (8,13) supporté dans le boîtier par l'intermédiaire de son arbre (3) et comportant au moins un enroulement rotorique (13), le stator (4,11,12) et le rotor (8,13) étant disposés mutuellement en vis-à-vis par des surfaces frontales perpendiculaires à l'axe de rotation, en formant un entrefer axial (14) en forme de disque annulaire, et chaque enroulement (11,12,13) étant formé de plusieurs boucles de conducteurs (21 à 26) situées dans un plan et réparties symétriquement tout autour dans un plan perpendiculaire à l'axe de rotation sur la face frontale d'une partie en fer (4) du stator ou d'une partie en fer (8) du rotor, caractérisé par le fait
que les boucles de conducteurs, qui forment un enroulement (11,12,13), sont réalisées sous la forme de spirales conductrices (21 à 26) approximativement circulaires sur au moins une surface d'un disque d'enroulement formé par une feuille (20) et que les disques d'enroulement sont collés sur les faces frontales de la partie en fer (4) du stator ou de la partie en fer (8) du rotor.

2. Synchro-transmetteur suivant la revendication 1, caractérisé par le fait que le stator et le rotor comportent chacun une seule pièce en fer en forme de disque (4,8), ces pièces en fer ayant des surfaces frontales tournées l'une vers l'autre et sur lesquelles sont fixés les disques d'enroulement.

3. Synchro-transmetteur suivant la revendication 1 ou 2, caractérisé par le fait que sur les deux faces des feuilles (20) sont formées des spirales de conducteurs opposées de même sens (21a,21b,..., 26a,26b), qui forment un enroulement partiel commun (21...26).

4. Résolveur suivant l'une des revendications 1 à 3, caractérisé par le fait que les spirales de conducteurs ou les enroulements partiels (21 à 26), qui sont disposés au voisinage les uns des autres dans la direction circonférentielle, du stator et du rotor ont respectivement des sens alternativement opposés d'enroulement et forment des couples de pôles magnétiques (N; S).

5. Synchro-transmetteur suivant l'une des revendications 1 à 4, caractérisé par le fait que dans un plan d'enroulement sont disposés respectivement six spirales de conducteurs ou enroulements partiels (21 à 26) répartis uniformément autour de l'axe de rotation et ayant des sens alternativement opposés d'enroulement.

6. Synchro-transmetteur suivant l'une des revendications 1 à 5, caractérisé par le fait que le stator ou le rotor, mais de préférence le stator, comporte deux disques d'enroulement (11,12), dont le premier porte un enroulement sinusoïdal (11) et dont le second porte un enroulement cosinusoidal (12) décalé électriquement de 90°.

7. Synchro-transmetteur suivant l'une des revendications 1 à 6, caractérisé par le fait que l'envoi du courant au rotor (8, 13) est réalisé par l'intermédiaire d'un transformateur réglable (15,16,17,18), dont la bobine (18) du rotor est reliée à l'enroulement rotorique (13) et dont la bobine (7) du stator est reliée à une source de tension alternative.

8. Synchro-transmetteur suivant la revendication 7, caractérisé par le fait qu'un noyau (17) du rotor du transformateur est réalisé d'un seul tenant avec la partie de fer (8) du rotor.

9. Synchro-transmetteur suivant la revendication 7 ou 8, caractérisé par le fait que les enroulements du transformateur réglable sont constitués également par des disques d'enroulement comportant des voies conductrices de forme spiralée.

10. Synchro-transmetteur suivant l'une des revendications 1 à 9, caractérisé par le fait qu'au moins les parties en fer du stator et du rotor sont réalisées sous la forme de pièces frittées formées d'une poudre de fer enrobée d'une matière plastique.
